(19) Europäisches Patentamt

European Patent Office

Office européen des brevets

(11) EP 0 736 919 B1

(12) EUROPÄISCHE PATENTSCHRIFT

(45) Veröffentlichungstag und Bekanntmachung des Hinweises auf die Patenterteilung:
01.07.1998 Patentblatt 1998/27

(51) Int Cl.⁶: **H01M 4/38**

(21) Anmeldenummer: 96102419.7

(22) Anmeldetag: 17.02.1996

(54) **Alkalische Metalloxid-Metallhydrid-Batterie**

Alkaline metal oxide, metal hydride battery

Batterie alcaline du type oxyde métallique, hydrure métallique

(84) Benannte Vertragsstaaten:
AT BE DE FR GB NL

(30) Priorität: 06.04.1995 DE 19512841

(43) Veröffentlichungstag der Anmeldung:
09.10.1996 Patentblatt 1996/41

(73) Patentinhaber:
• VARTA Batterie Aktiengesellschaft
30419 Hannover (DE)
• TREIBACHER AUERMET Produktionsges.
m.b.H.
9330 Treibach-Althofen (AT)

(72) Erfinder:
• Lichtenberg, Frank, Dr.
67378 Zeiskam (DE)
• Köhler, Uwe, Dr.
65779 Kelkheim (DE)
• Kleinsorgen, Klaus
65779 Kelkheim (DE)

• Fölzer, Andreas
9330 Treibach-Althofen (AT)
• Bouvier, Alexander, Dr.
9021 Krumpendorf (AT)

(74) Vertreter: Kaiser, Dieter Ralf, Dipl.-Ing.
Gundelhardtstrasse 72
65779 Kelkheim (DE)

(56) Entgegenhaltungen:
• PATENT ABSTRACTS OF JAPAN vol. 018, no. 662 (C-1287), 14.Dezember 1994 & JP-A-06 256873 (SHIN ETSU CHEM CO LTD), 13.September 1994,
• PATENT ABSTRACTS OF JAPAN vol. 018, no. 468 (C-1244), 31.August 1994 & JP-A-06 145850 (SHIN KOBE ELECTRIC MACH CO LTD), 27.Mai 1994,
• PATENT ABSTRACTS OF JAPAN vol. 018, no. 160 (M-1578), 17.März 1994 & JP-A-05 331506 (DAIDO STEEL CO LTD), 14.Dezember 1993,

**Beschreibung**

Die Erfindung betrifft eine alkalische Metalloxid/Metallhydrid-Batterie mit einer positiven Elektrode, die ein Metalloxid enthält, und einer negativen Elektrode, die von einem wasserstoffspeichemden Legierungsmaterial gebildet ist, welches neben Mischmetall die Elemente Nickel und Kobalt umfaßt und die Kristallstruktur des Ca $Cu_5$-Typs aufweist.

Zellen des wiederaufladbaren Metalloxid/Metallhydrid-Systems erweisen sich in der Regel den konventionellen Akkumulatorenzellen der Systeme Blei-Säure oder Nickel-Cadmium als überlegen. Die Überlegenheit gründet sich vor allem auf die bedeutend bessere Ladungsaufnahmefähigkeit der wasserstoffspeichernden negativen Elektrode im Vergleich zu derjenigen einer negativen Blei- oder Cadmiumelektrode.

Die Wasserstoffspeicherung durch das aktive Material M der negativen Metallhydridelektrode erfolgt reversibel nach dem Schema

$$M + H_2O + e^- = MH + OH^- \text{ (Ladung)}$$

$$MH + OH^- = M + H_2O + e^- \text{ (Entladung),}$$

wobei sich durch den Ladestrom unter Wasserzersetzung ein Hydrid MH bildet, während bei der Entladung Wasserstoff entbunden wird, der sich mit $OH^-$-Ionen zu $H_2O$ vereinigt. Dem gleichzeitig freigesetzten Elektron entspricht ein im äußeren Stromkreis der Zelle fließender Strom.

Der positive Partner der negativen Wasserstoffspeicher- oder Metallhydridelektrode ist im allgemeinen eine Nickelhydroxidelektrode, an der die folgenden reversiblen Reaktionen ablaufen:

$$Ni(OH)_2 + OH^- = Ni\,OOH + e^- + H_2O \text{ (Ladung)}$$

$$Ni\,OOH + H_2O + e^- = Ni(OH)_2 + OH^- \text{ (Entladung)}$$

Beide Elektroden sind im alkalischen Elektrolyten durch einen Separator getrennt.

Das elektrochemisch aktive Material der negativen Elektrode leitet sich bei der Mehrzahl der Metalloxid-Metallhydrid-Batterien, die insbesondere auch unter den eingangs formulierten Gattungsbegriff fallen, von einer intermetallischen Verbindung La $Ni_5$ ab, in welcher sowohl ein Teil des Lanthans als auch ein Teil des Nikkels durch andere Metalle ersetzt ist, ohne daß die Fähigkeit zur Bildung eines Metallhydrids dadurch gemindert wird.

Beispielsweise kann ein Teil des Lanthans durch andere Seltenerdmetalle und ein Teil des Nickels durch Metalle wie Kobalt, Aluminium, Mangan, Eisen oder Chrom ersetzt sein.

Alle diese Legierungen werden in der Literatur nach ihrem Repräsentanten, dem $LaNi_5$, einem $AB_5$-Typ zugeordnet. Er besitzt eine Ca $Cu_5$-Struktur.

Andere Wasserstoffspeicherlegierungen mit Titan und/oder Zirkonium und Nickel als wesentlichen Bestandteilen gehören dagegen den Typen AB und $AB_2$ an (TiNi und $ZrNi_2$).

Bei den von $LaNi_5$ abgeleiteten Legierungen ist La gewöhnlich durch ein sogenanntes Mischmetall (Mm) ersetzt, welches insbesondere La, Ce sowie weitere Seltenerdmetalle enthält. Die Substitution des Nickels durch andere Metalle verfolgt meistens das Ziel, den Wasserstoff-Gleichgewichtsdruck in der Zelle zu senken.

Aus der Patentliteratur ist eine Vielzahl derartiger Legierungen bereits bekannt. Beispielsweise offenbart die US-PS 5 008 164 eine Legierung der allgemeinen Zusammensetzung Mm $Ni_a\,Co_b Mn_c$, wobei $2{,}5 < a < 3{,}5$. Durch teilweisen Ersatz eines der Substituenten unter Bildung einer Legierung Mm $Ni_a\,Co_b Mn_c\,X_d$, wobei X aus der Gruppe Fe, Cu, Mo, W, B, Al, Si und Sn ausgewählt sein kann, wird aus dem 4-komponentigen ein 5-komponentiger B-Teil der $AB_5$-Legierung.

Konkrete Beispiele für Legierungszusammensetzungen lassen sich in großer Zahl der EP-A-206 776 (z. B. Mn $Ni_{3,7}\,Co_{0,5}\,Mn_{0,6}\,Al_{0,2}$) oder der EP-B-271 043 (z. B. Mn $Ni_{3,95}\,Al_{0,3}\,Co_{0,75}$) entnehmen. Eine ebenfalls dem Stand der Technik angehörende und in der Praxis eingesetzte Legierung hat die Zusammensetzung Mm $Ni_{4,3-y}\,Co_y\,Al_{0,4}\,Mn_{0,3}$ ($0{,}3 \leq y \leq 0{,}7$).

Schließlich wird in der EP 420 669 auch eine als Gas-Atomisierung bezeichnete Präparations-methode für ein wasserstoffspeichemdes Legierungspulver offenbart. Bei dieser werden Argongas-Strahlen aus Düsen senkrecht gegen einen unter Druck aus einem Schmelzkessel ausströmenden Flüssigkeitsstrahl der Legierung gerichtet. Das Ergebnis ist eine atomare Zerstäubung des Schmelzgutes zu sphärischen Partikeln, deren Oberflächen sich in freier Umgebung abkühlen können und die am Boden einer Kühlkammer gesammelt werden.

Mm $Ni_{4,3-y}\,Co_y\,Al_{0,4}\,Mn_{0,3}$ ($0{,}3 \leq y \leq 0{,}7$), welche den gleichen geringen Kobaltgehalt $y = 0{,}3$ aufweist, ganz erheblich steigern. Die Verwendung von Si, V, Sn oder Cr anstelle von Fe oder Cu ergibt geringe Kapazitäten oder geringere Zyklenlebensdauern.

Besonders vorteilhaft ist es, die erfindungsgemäßen Legierungen durch Sprühverdüsen der eingeschmolzenen Legierungen und anschließendes Tempern und Mahlen herzustellen. Das Tempern erfolgt vorzugsweise für Temperaturen von 700°C bis 900°C für einen Zeitraum von mehreren Stunden, beispielsweise 2 h bis 4 h.

Für die elektrischen Versuche wurden NiH-Zellen der Baugröße AA verwendet, für deren negative Elektroden Legierungen von erfindungsgemäßer Zusammensetzung eingesetzt waren. Vergleichszellen enthielten negative Elektroden aus der konventionellen Legierung.

Die Herstellung der Legierungsproben erfolgte entweder nach dem üblichen Schema: Erschmelzen der Ausgangsmetalle, Abgießen, 12 h Tempern bei 1000 °C im Vakuumofen, Mahlen, Aussieben der Korngrößen <75 µm oder erfindungsgemäß durch Sprühverdüsen der erschmolzenen Legierung, Tempern und Mahlen. Ausweislich ihrer Röntgendiffraktogramme erwiesen sich alle Proben als einphasig und zeigten auschließlich die typischen Peaks der $CaCu_5$-Struktur.

Bei der Weiterverarbeitung zu negativen Elektroden wurden die Legierungen nach Zumischen von Kohlenstoff und eines Binders aus Polytetrafluorethylen auf ein Ni-Lochblech aufgewalzt.

Als positive Elektroden dienten Ni-Schaumelektroden, die durch Einpastieren von Nickelhydroxid in ein Ni-Schaum-Gerüst erhalten wurden. Die Paste setzte sich aus 90% sphärischem Nickelhydroxid und zum restlichen Teil aus CoO, Bindemittel (Polytetrafluorethylen) und Wasser zusammen.

Die Scheider waren handelsübliche Typen aus beispielsweise Polyamidvlies.

Der Elektrolyt bestand aus 6,5molarer KOH und 0,5molarer LiOH-Lösung in einer Dosierung aus 2,1 ml/ Zelle.

Zu Beginn der eigentlichen Zyklisierung wurden alle Zellen unter folgenden Bedingungen konditioniert (Inbetriebsetzung):

Der Erfindung liegt das Problem zugrunde, daß bekannte Speicherlegierungen mit niedrigen Kobalt-Gehalten zwar eine gute Strombelastbarkeit aufweisen, auch bei tiefen Temperaturen, daß aber andererseits eine hohe Zyklenlebensdauer nur mit größerem Kobaltgehalt erzielt werden kann. Dem steht die Knappheit und der hohe Preis dieses Rohstoffes im Wege.

Es stellte sich daher die Aufgabe, von der letztgenannten Legierungszusammensetzung ausgehend ein modifiziertes Legierungsmaterial verfügbar zu machen, welches bei einem möglichst gering gehaltenen Kobalt-Anteil eine Verlängerung der Zyklenlebensdauer bewirkt.

Die Aufgabe wird erfindungsgemäß mit einer Metalloxid-Metallhydrid-Batterie mit einer Wasserstoffspeicherlegierung als aktives Material der negativen Elektrode gelöst, wie sie durch Patentanspruch 1 definiert ist.

Danach erfüllt eine Legierung

$Mm\ Ni_v\ Al_w\ Mn_x\ Co_y\ M_z$

die gestellten Erwartungen, in der Mm ein Mischmetall mit einem La-Gehalt von 25 bis 60 Gew.%, vorzugsweise von 40 bis 60 Gew.%, Rest bis 100 Gew.% überwiegend Ce bedeutet und M für eines der Metalle Cu oder Fe, auch Gemischen unter denselben, steht. Die Anteile der einzelnen Komponenten können erfindungsgemäß in den Grenzen

$0{,}1 \le z \le 0{,}4$ ; $0{,}2 \le y \le 0{,}4$; $0{,}3 \le w \le 0{,}5$; $0{,}2 \le x \le 0{,}4$ und $4{,}9 \le v + w + x + y + z \le 5{,}1$

schwanken. Das Mischmatall enthält neben Lanthan insbesondere Ce (mehr als 25Gew.%) sowie Pr und Nd. Bei Verwendung von Cu und Fe liegt das bevorzugte Verhältnis Cu/Fe im Bereich $0{,}5 \le Cu/Fe \le 2$.

Wie sich in Versuchen mit der Legierungsserie $Mm\ Ni_{3,8}\ Al_{0,4}\ Mn_{0,3}\ Co_{0,3}\ M_{0,2}$ mit M = Fe, Cu herausgestellt hat, läßt sich die Zyklenlebensdauer von Zellen, wenn für deren negative Elektrode ein Legierungsmaterial mit den Substituenten Cu und/oder Fe für einen Teil des Kobalts eingesetzt wird, im Vergleich zu einer konventionellen Wasserstoffspeicherlegierung

1x    (Laden 15 h mit 0,1 C; Lagerung 24 h bei 60°C; Entladen mit 0,2 C bis Entladeschlußspannung 1 V).

3x    (Laden 7 h mit 0,2 C; Pause 0,25 h. Entladen mit 0,2 C bis Entladeschlußspannung 0,9 V).

Das Ergebnis der Zyklisierungsversuche ist in einer Figur festgehalten, welche die Entladekapazitäten C (Ah) in Abhängigkeit von der Zyklenzahl n zeigt.

Die mit 1 bezeichnete Kurve bezieht sich auf eine konventionelle Legierung mit dem Kobaltgehalt $Co_{0,3}$, die mit 2 bezeichnete Kurve auf eine andere konventionelle Legierung mit dem Kobaltgehalt $Co_{0,7}$. Die offensichtlich sehr gute Zyklenlebensdauer dieses bekannten Materials wird allerdings durch einen entsprechend hohen Einsatz an Kobalt erkauft.

Erfindungsgemäße Legierungen a (mit M = Cu) oder b (mit M = Fe) sind der bekannten Legierung 1 hinsichtlich des Lebensdauerverhaltens klar überlegen.

Indessen kommen erfindungsgemäße Legierungen in ihrer Zyklenlebensdauer trotz des geringen Kobaltgehalts der konventionellen, Co-reichen Legierung 2 sehr nahe, wenn man bei ihrer Herstellung die Gasatomisierung anwendet und sie den folgenden Verfahrensschritten unterwirft: Schmelzen, Sprühverdüsen, Aussieben der so erhaltenen kugelförmigen Teilchen < 125 µm, 3 h Tempern bei 800°C im Vakuumofen, Mahlen. Dabei ist es erfindungsgemäß unerläßlich, daß das Sprühverdüsen in Verbindung mit den Folgeschritten Tempem und Mahlen durchgeführt wird. Die Kurven A (M = Cu) und B (M = Fe) beziehen sich auf Legierungen eben dieser besonders vorteilhaften Herstellungsweise.

Sowohl das Sprühverdüsen als auch das anschließende Tempem und Mahlen tragen erheblich zur Kapazität und Zyklenlebensdauer bei, aufgrund dieser Behandlungsschritte ist die Zyklenlebensdauer deutlich höher als bei den konventionell hergestellten Proben a und b.

Das Besondere an den erfindungsgemäß durch Sprühverdüsen, Tempem und Mahlen hergestellten Legierungen liegt darin, daß ihre Pulverpartikel sphärisch geformt sind und im Rasterelektronenmikroskop (REM) eine zellenartige Substruktur aufweisen. Die Substrukturen sind voneinander durch Grenzbereiche getrennt. Diese Grenzbereiche, die bis zu ca. 20 Vol.% eines Partikels einnehmen, unterscheiden sich signifikant durch die chemische Zusammensetzung (und wahrscheinlich auch in der kristallographischen Ordnung) von den Substrukturen. Es wird vermutet, daß die Grenzbereiche nur eine geringe Wasserstoffspeicherkapazität haben. Das Tempern bewirkt, daß sich die Grenzbereiche durch Diffusionsprozesse zu einem gewissen Teil auflösen, was vermutlich der Grund für den Kapazitätsanstieg ist. Das Mahlen der getemperten und kugelförmigen Partikel hat zur Folge, daß die Kugelform aufgebrochen wird. Dadurch haben in Elektroden die Partikel untereinander einen verbesserten elektrischen Kontakt, was eine erhöhte Massenausnutzung und damit eine nochmals gesteigerte Kapazität zu Folge hat.

Der wesentliche Vorteil der Erfindung ist somit der, daß mit den neuen Cu- bzw. Fe-haltigen Wasserstoffspeicherlegierungen teures Kobalt ersetzt werden kann. Mit diesem negativen Elektrodenmaterial ausgestattete Ni-H-Zellen können nahezu die gleiche Zyklenlebensdauer (ca. 1000 Zyklen) erreichen wie Zellen mit konventionellen Legierungen, deren Kobaltgehalt etwa doppelt so hoch ist. Mit konventionellen Legierungen, die etwa die gleiche geringe Menge Co wie die erfindungsgemäßen Legierungen enthalten, lassen sich nur Zyklenlebensdauern um ca. 400 Zyklen erzielen. Für die kommerzielle Verwendung reicht dies nicht aus. Andererseits werden die Anforderungen der Praxis an die Belastbarkeit der Zellen durch die konventionellen Legierungen mit geringem Kobaltgehalt voll erfüllt. Die erfindungsgemäßen Legierungen stehen ihnen darin nicht nach, d.h. es muß wegen der Teilsubstitution des Kobalts durch Cu bzw. Fe keine Kapazitätseinbuße bei höherer Belastung in Kauf genommen werden. Wie Messungen der Entladekapazitäten unter verschiedenen Belastungen von 1 C bis 5 C gezeigt haben, liegen diese bei höheren Belastungen (um 3 C) sogar um etwa 10 % über den Kapazitätswerten, die mit konventioneller Legierungen erreicht werden. Erfindungsgemäße Legierungen reagieren somit hinsichtlich ihres Kapazitätsverhaltens auf Belastungsänderungen weniger empfindlich. Auch weitere Eigenschaften wie Selbstentladung oder Druckverhalten sind im Vergleich zu konventionellen Legierungen nicht beeinträchtigt.

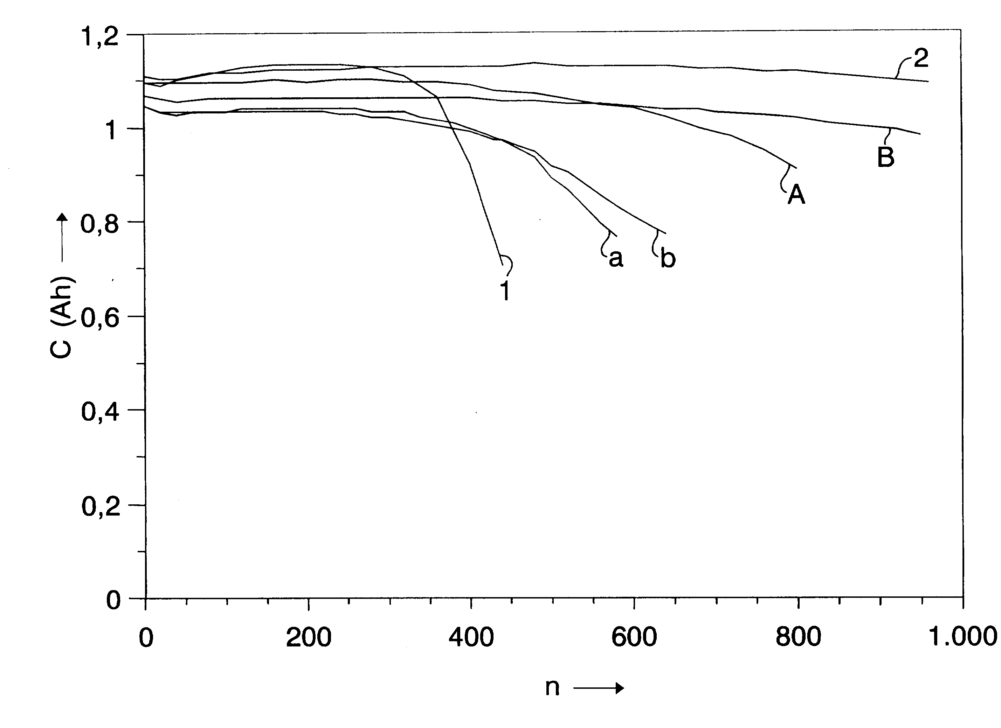

## Patentansprüche

1. Alkalische Metalloxid-Metallhydrid-Batterie mit einer positiven Elektrode, die ein Metalloxid enthält, und einer negativen Elektrode, die von einem wasserstoffspeichernden Legierungsmaterial gebildet ist, welches neben Mischmetall die Elemente Nickel und Kobalt umfaßt und die Kristallstruktur des Ca Cu$_5$-Typs aufweist, dadurch gekennzeichnet, daß in der Legierung ein Teil des Kobalts durch Eisen und/oder Kupfer ersetzt ist und daß sie die Zusammensetzung

$$Mm\ Ni_v\ Al_w\ Mn_x\ Co_y\ M_z\ mit\ Mm = Mischmetall,$$

mit M = Fe und/oder Cu und mit den Parametern

$$0,2 \leq x \leq 0,4$$

$$0,1 \leq z \leq 0,4$$

$$0,2 \leq y \leq 0,4$$

$$0,3 \leq w \leq 0,5$$

$$4,9 \leq v + w + x + y + z \leq 5,1$$

aufweist.

2. Alkalische Metalloxid-Metallhydrid-Batterie nach Anspruch 1, dadurch gekennzeichnet, daß das Mischmetall einen La-Gehalt von 25 bis 60 Gew.%, vorzugsweise von 40 bis 60 Gew.%, Rest bis 100 Gew.% überwiegend Ce sowie weitere Seltenerdmetalle besitzt.

3. Alkalische Metalloxid-Metallhydrid-Batterie nach einem der Ansprüche 1 bis 2, dadurch gekennzeichnet, daß die positive Elektrode eine Nickelhydroxidelektrode ist.

4. Alkalische Metalloxid-Metallhydrid-Batterie nach Anspruch 3, dadurch gekennzeichnet, daß die Nickelhydroxidelektrode vom Typ der Schaummetallelektrode ist.

5. Verfahren zur Herstellung einer negativen wasserstoffspeichernden Legierungselektrode für eine alkalische Metalloxid-Metallhydrid-Batterie nach Anspruch 1, dadurch gekennzeichnet, daß die erschmolzene Legierung sprühverdüst wird und das aufgefangene Material in nachfolgenden Schritten getempert und gemahlen wird und gegebenenfalls unter Zugabe eines Bindemittels auf einen Elektrodenträger aufgebracht wird.

6. Verfahren nach Anspruch 5, dadurch gekennzeichnet, daß die Temperung während 2 h bis 4 h bei 700° C bis 900°C unter Vakuum durchgeführt wird.

## Claims

1. Alkaline metal oxide/metal hydride battery, having a positive electrode which contains a metal oxide, and a negative electrode which is formed by a hydrogen storage alloy material that comprises, in addition to misch metal, the elements nickel and cobalt

and has the $CaCu_5$ type crystal structure, characterized in that a part of the cobalt in the alloy is replaced by iron and/or copper, and in that it has the composition

$MmNi_vAl_wMn_xCo_yM_z$ with Mm = misch metal, with M = Fe and/or Cu and with the parameters

$$0.2 \le x \le 0.4$$

$$0.1 \le z \le 0.4$$

$$0.2 \le y \le 0.4$$

$$0.3 \le w \le 0.5$$

$$4.9 \le v + w + x + y + z \le 5.1.$$

2. Alkaline metal oxide/metal hydride battery according to Claim 1, characterized in that the misch metal has an La content of from 25 to 60% by weight, preferably from 40 to 60% by weight, the remainder to 100% by weight being predominantly Ce and other rare-earth metals.

3. Alkaline metal oxide/metal hydride battery according to one of Claims 1 to 2, characterized in that the positive electrode is a nickel hydroxide electrode.

4. Alkaline metal oxide/metal hydride battery according to Claim 3, characterized in that the nickel hydroxide electrode is of the foamed-metal electrode type.

5. Process for the production of a negative hydrogen storage alloy electrode for an alkaline metal oxide/metal hydride battery according to Claim 1, characterized in that the molten alloy is atomized and the collected material is heat-treated and pulverized in subsequent steps and, if appropriate with the addition of a binder, is applied onto an electrode support.

6. Process according to Claim 5, characterized in that the heat-treatment is carried out for 2 h to 4 h at 700°C to 900°C under vacuum.

**Revendications**

1. Batterie alcaline oxyde métallique-hydrure métallique avec une électrode positive qui contient un oxyde métallique et une électrode négative, qui est constituée d'un matériau d'alliage emmagasinant l'hydrogène qui, outre un métal mixte, comprend les éléments nickel et cobalt et présente la structure cristalline du type $Ca\ Cu_5$, caractérisée en ce que dans l'alliage on remplace une partie du cobalt par du fer et/ou du cuivre et qu'il présente la composition :
$Mm\ Ni_v\ Al_w\ Mn_x\ Co_y\ M_z$ avec Mm = métal mixte, avec m = Fe et/ou Cu et avec les paramètres :

$$0,2 \le x \le 0,4$$

$$0,1 \le z \le 0,4$$

$$0,2 \le y \le 0,4$$

$$0,3 \le w \le 0,5$$

$$4,9 \le v + w + x + y + Z \le 5,1.$$

2. Batterie alcaline oxyde métallique-hydrure métallique selon la revendication 1, caractérisée en ce que le métal mixte a une teneur en La de 25 à 60 % en poids, de préférence 40 à 60 % en poids, le complément à 100 % en poids est essentiellement du Ce ainsi que d'autres métaux de terres rares.

3. Batterie alcaline oxyde métallique-hydrure métallique selon l'une des revendications 1 à 2, caractérisée en ce que l'électrode positive est une électrode d'hydroxyde de nickel.

4. Batterie alcaline oxyde métallique-hydrure métallique selon la revendication 3, caractérisée en ce que l'électrode d'hydroxyde de nickel est du type d'électrode en mousse de métal.

5. Procédé de préparation d'une électrode d'alliage négative emmagasinant l'hydrogène pour une batterie alcaline oxyde métallique-hydrure métallique selon la revendication 1, caractérisé en ce qu' on pulvérise par une buse l'alliage fondu et qu'on traite thermiquement par recuit le matériau obtenu et qu'on le broie dans des étapes ultérieures et qu'on le dépose sur un support d'électrodes, le cas échéant après addition d'un liant.

6. Procédé selon la revendication 5, caractérisé en ce qu' on réalise le traitement thermique de recuit pendant 2 h à 4 h entre 700°C et 900°C sous vide.

EP 0 736 919 B1